# EUROPÄISCHE PATENTSCHRIFT

(11) **EP 2 258 467 B1**
(45) Veröffentlichungstag und Bekanntmachung des Hinweises auf die Patenterteilung: **19.03.2014**
(21) Anmeldenummer: 09007381.8
(22) Anmeldetag: 04.06.2009
(51) Int. Cl.: B01F 9/00, B01F 15/00, B01F 3/08, B01F 3/12

(54) **Verfahren und Vorrichtung zum Mischen von flüssigen, fließfähigen oder pulverförmigen Materialien, insbesondere zum Mischen von Autoreparaturlacken zur Verwendung in Spritzpistolen**
Method and device for mixing liquid, flowable or powdery materials, in particular for mixing automobile repair varnishes for use in spray guns
Procédé et dispositif de mélange de matériaux liquides, fluides ou pulvérulents, notamment pour mélanger des laques de réparation pour véhicules en vue de l'utilisation de pistolets pulvérisateurs

(43) Veröffentlichungstag der Anmeldung: 08.12.2010
(73) Patentinhaber: Collomix Rühr-und Mischgeräte GmbH, 85080 Gaimersheim (DE)
(72) Erfinder: Essing, Alexander, 85049 Ingolstadt (DE); Viehböck, Ingo, 65510 Idstein (DE); Buchberger, Herbert, 85111 Adelschlag-Pietenfeld (DE)
(74) Vertreter: Liebl, Thomas

(56) Entgegenhaltungen:
- EP-B- 1 293 245
- GB-A- 2 033 771
- JP-A- 63 291 634
- JP-A- 63 310 629
- JP-A- 2006 263 691
- JP-A- 2008 006 411
- US-A- 4 497 581
- US-A1- 2007 002 682
- US-A1- 2007 247 967
- US-A1- 2011 315 785

## Beschreibung

Die Erfindung betrifft ein Verfahren und eine Vorrichtung zum Mischen von flüssigen, fließfähigen oder pulverförmigen Materialien, insbesondere zum Mischen von Autoreparaturlacken zur Verwendung in Spritzpistolen.

Eine derartige Mischvorrichtung ist bereits aus der EP 1 293 245 B1 bekannt, bei der auf einem Rahmen ein als Dreharm ausgebildetes erstes Bauteil drehbar gelagert ist und eine Drehachse aufweist. Der Dreharm sitzt drehfest auf einer Welle einer Antriebseinrichtung, die im Rahmen integriert sein kann. An dem Rahmen ist auf einer dem Dreharm entgegengerichteten Oberfläche eine Keilriemenscheibe drehfest angeordnet. Die Keilriemenscheibe hat eine Durchgangsöffnung für die Antriebswelle und ist mit einer radiale Keile tragenden Wirkfläche konzentrisch zur Drehachse der Welle angeordnet. An einem Schenkel des Dreharms ist weiter ein als Mischbecher zur Aufnahme eines Mischgutes ausgebildetes zweites Bauteil drehbar gelagert. Diese Mischgutaufnahme ist schräg beziehungsweise winklig gegen die Längserstreckungsrichtung des Dreharms geneigt. Ein Außenumfangsbereich dieser Mischgutaufnahme weist eine Verzahnung auf und ist damit als integral in die Mischgutaufnahme integrierte Keilriemenscheibe ausgebildet. Zusätzlich zu diesen Keilriemenscheiben sind dreharmseitig noch zwei voneinander beabstandete und bezüglich einer Symmetrieachse als Gleichteile ausgebildete axiale Umlenkelemente vorgesehen, um die ein Keilriemen mit seiner glatten Seite geführt ist. Dieser Keilriemen wird über zwei ebenfalls wiederum bezüglich einer Symmetrieachse symmetrisch angeordnete, dreharmseitige radiale Umlenkelemente zu der integralen mit der Mischgutaufnahme ausgebildeten Keilriemenscheibe geführt. Auch hier ist der Keilriemen mit seiner glatten Seite um die radialen Umlenkelemente herumgeführt. Der Drehantrieb und die Umlenkeinrichtung sind hier so ausgebildet, dass die Drehrichtung des Dreharms und die Drehrichtung der Mischgutaufnahme entgegengesetzt zueinander gerichtet sind.

Mit einem derartigen Aufbau der Umlenkeinrichtung soll eine Umlenkung einer Drehbewegung auch bei relativ großen Gewichten auf dem zweiten Bauteil (Mischgutaufnahme) dauerhaft und betriebssicher durchgeführt werden können. Aufgrund der Vielzahl der axialen und radialen Umlenkelemente ist der Aufbau jedoch insgesamt gesehen relativ aufwendig in der Herstellung. Zudem ist ein derartiger Aufbau auch relativ störanfällig.

Aus der US 2007/000 2682 A1 ist ferner ein Aufbau bekannt, bei dem in Verbindung mit einer Mischvorrichtung, die ein an einem Rahmen gelagertes erstes Bauteil und eine drehbar am ersten Bauteil gelagerte Mischgutaufnahme als zweites Bauteil aufweist, vorgesehen ist, die beiden Bauteile jeweils mit einer Drehzahl von größer 500 Umdrehungen pro Minute anzutreiben, wobei die Drehzahlen bevorzugt größer 1000 Umdrehungen pro Minute und höchest bevorzugt größer 2000 Umdrehungen pro Minute sein sollen.

Eine in einem Schutzgehäuse angeordnete Mischvorrichtung ist ferner aus der US 4,497,581 A1 bekannt.

Demgegenüber ist es Aufgabe der vorliegenden Erfindung, ein Verfahren und eine Vorrichtung zum Mischen von flüssigen, fließfähigen oder pulverförmigen Materialien, insbesondere zum Mischen von Autoreparaturlacken zur Verwendung in Spritzpistolen, zur Verfügung zu stellen, die einen einfachen und damit preiswerten Aufbau aufweist und die zudem mit hoher Funktionssicherheit und sehr guten Mischergebnissen betrieben werden kann.

Diese Aufgabe wird bezüglich des Verfahrens gelöst mit den Merkmalen des Anspruchs 1 und bezüglich der Vorrichtung gelöst mit den Merkmalen des Ansprüchs 2.

Gemäß Anspruch 1 ist zum Mischen von flüssigen, fließfähigen oder pulverförmigen Materialien, insbesondere zum Mischen von Autoreparaturlacken zur Verwendung in Spritzpistolen, ein an einem Rahmen drehbar gelagertes erstes Bauteil sowie ein drehbar an dem ersten Bauteil gelagertes und eine Mischgutaufnahme aufweisendes oder ausbildendes zweites Bauteil vorgesehen. Ferner ist wenigstens eine Antriebseinrichtung für einen Drehantrieb des ersten Bauteils und einen Drehantrieb der Mischgutaufnahme vorgesehen, wobei die Antriebseinrichtung bevorzugt so ausgebildet ist, dass die Drehrichtung des ersten Bauteils entgegengesetzt zu der Drehrichtung der Mischgutaufnahme ist. Erfindungsgemäß ergibt sich, wie langwierige erfinderseitige Versuche gezeigt haben, bei einem Drehzahlverhältnis zwischen der Drehzahl des ersten Bauteils und der Drehzahl der Mischgutaufnahme von 1:1,1 bis 1:2,0, bevorzugt von in etwa 1:1,3 bis in etwa 1:1,8, das heißt also zum Beispiel bei einer um 1,1- bis 2,0-mal größeren Drehzahl der Mischgutaufnahme, ein hervorragendes Mischergebnis, und zwar insbesondere bei Autoreparaturlacken. Das heißt, dass es dort zu keiner unerwünschten Blasenbildung kommt und gleichzeitig eine gute und gleichmäßige Verteilung der zu mischenden Lacke erfolgt, so dass das mit der Spritzpistole erzielte Lackierergebnis eine hervorragende Qualität aufweist. Wie die erfinderseitigen Versuche weiter gezeigt haben, werden diese hervorragende Ergebnisse in einem Drehzahlbereich von 200 bis 400 Umdrehungen pro Minute (U/min), bevorzugt von in etwa 250 bis 350 Umdrehungen pro Minute (U/min) des ersten Bauteils erzielt. Dieses zuvor angegebene Drehzahlverhältnis bewirkt, dass im Mischgut eine gewünschte globale Strömung erzeugt wird. Höhere Drehzahlverhältnisse wirken eher wie eine Zentrifuge und führen gegebenenfalls zu einer Entmischung. Bei niedrigeren Drehzahlverhältnissen entsteht dagegen, wie die erfinderseitigen, umfangreichen Versuche gezeigt haben, keine solche effektive Strömung, die eine ausreichende Durchmischung erlaubt. Mit einem derartigen Drehzahlverhältnis wird somit eine hervorragende Mischwirkung erzielt, die zudem ein übermäßiges "Schwappen" des Mischgutes in der Mischgutaufnahme verhindert. Dies hat den Vorteil, dass der Gefäßdeckel nur minimal benetzt und der bei insbesondere Autoreparaturlacken regelmäßig im Deckel vorhandene Filter nicht mit einem inhomogenen Mischgut verschmutzt wird.

Insbesondere in Verbindung mit dem zuvor genannten Drehzahlverhältnis ist eine Geschwindigkeitsverteilung sinnvoll, bei der sich als resultierende Geschwindigkeit an der Mischgutaufnahme ein über den Durchmesser gesehen dreieckförmiges Geschwindigkeitsprofil einstellt, bei dem die kleinste und größte Mischgutgeschwindigkeit jeweils auf gegenüberliegenden Mischgutrandbereichen liegen, und zwar insbesondere dergestalt, dass die größte Geschwindigkeit in dem der Antriebswelle des ersten Bauteils zugeordneten Mischgutaufnahmerandbereich erzielt wird. Ein derartiges Geschwindigkeitsfeld als resultierendes Geschwindigkeitsfeld an der Mischgutaufnahme trägt ebenfalls wesentlich dazu bei, ein übermäßiges Schwappen des Mischgutes in der Mischgutaufnahme zu vermeiden. Dadurch werden die zuvor genannten Vorteile erreicht.

Ein kompakter Aufbau lässt sich zudem dadurch erreichen, dass die Drehantriebswelle gemäß einer weiteren bevorzugten Ausgestaltung an dem der Mischgutaufnahme abgewandten Wellenbereich eine Riemenscheibe aufweist, um die herum ein Antriebsriemen der Antriebseinrichtung geführt ist. Gemäß einer hierzu bevorzugten Ausgestaltung ist der Antriebsriemen weiter um eine rahmenfeste Riemenscheibe geführt, durch die eine Antriebswelle eines bevorzugt durch einen Schrittmotor ausgebildeten Antriebsmotors der Antriebseinrichtung drehbeweglich hindurchgeführt und drehfest mit dem bevorzugt als Schwenkarm ausgebildeten ersten Bauteil verbunden ist. Dadurch ergibt sich eine insgesamt wenig aufwendige und damit wenig störanfällige Riemenführung eines Riemenantriebs, mittels der die gewünschten Drehbewegungen auf funktionssichere und zuverlässige Art und Weise erzielt werden können. Die Verwendung eines Schrittmotors, mittels dem die Antriebswelle angetrieben wird, bringt dabei in Verbindung mit der zu bewältigenden Mischaufgabe insbesondere mit der zu bewältigenden Mischaufgabe, von Autoreparaturlacken, den Vorteil mit sich, dass dieser kompakt ausgebildet ist und somit ohne große Probleme in einen Rahmen der Mischvorrichtung integriert werden kann. Ein weiterer wesentlicher Vorteil eines derartigen Schrittmotors ist, dass dieser funkenlos arbeitet und somit die im Bereich der insbesondere Kraftfahrzeug-Lackierereien erforderlichen Explosionsschutzrichtlinien erfüllt. Ein weiterer entscheidender Vorteil des Schrittmotors ist zudem, dass dieser variabel ansteuerbar ist, insbesondere bezüglich seiner Drehzahl langsam hoch- und auch heruntergefahren werden kann, so dass das unerwünschte Hochschwappen der in der Mischgutaufnahme aufgenommenen, zu mischenden Flüssigkeiten, insbesondere von Lacken, zuverlässig vermieden werden kann. Außerdem weist ein Schrittmotor einen einfachen und preiswerten getriebelosen Aufbau auf.

Gemäß einem weiteren wesentlichen Erfindungsaspekt ist die Mischgutaufnahme lösbar an einer diese antreibende Drehantriebswelle der Antriebseinrichtung gehaltert. Bei einer derartigen lösbaren Halterung handelt es sich bevorzugt um eine werkzeuglos lösbare Halterung. Grundsätzlich könnte jedoch auch eine solche lösbare Halterung zum Einsatz kommen, bei der die Lösbarkeit nur mit Hilfe eines Werkzeuges herbeigeführt werden kann. Mit einer derartigen lösbaren Halterung der Mischgutaufnahme direkt an der die Mischgutaufnahme antreibenden Drehantriebswelle der Antriebseinrichtung wird eine erhöhte Flexibilität erreicht, da an zum Beispiel unterschiedliche Becherformen von Herstellerfirmen adaptierte Mischgutaufnahmen einfach, schnell und unkompliziert sowie auch funktionssicher ausgetauscht und vom zum Beispiel als Dreharm ausgebildeten ersten Bauteil abgenommen werden können. Des Weiteren ist eine derartige lösbare Verbindung der Mischgutaufnahme mit der Drehantriebswelle der Antriebseinrichtung auch für Reinigungszwecke von besonderem Vorteil, da die Zugänglichkeit einzelner Vorrichtungsbestandteile bei abgenommener Mischgutaufnahme wesentlich besser ist, als dies bei dauerhaft verbundener Mischgutaufnahme der Fall ist. Insbesondere bei Autoreparaturlacken (car-refinish-Lacken) besteht das Problem, dass die Lacke von den unterschiedlichen Herstellern in unterschiedlichen Behältern angeboten werden. Diese vorgefertigten Lacke müssen regelmäßig mittels zusätzlicher Lackzudosierungen auf die jeweils gewünschte beziehungsweise benötigte Lackfarbe feineingestellt werden. Dadurch ist ein weiteres, nachträgliches Mischen der Lackzusammensetzung erforderlich, um die Feinmischung zu homogenisieren. Diese nachträgliche Mischung erfolgt derzeit regelmäßig mit einem Rührstab in Handbedienung, was das Problem der Luftblasenbildung mit sich bringt, die wiederum nachher beim Spritzvorgang mit der Spritzpistole zu einer mangelhaften Lackqualität führt. Mit der erfindungsgemäßen Lösung kann eine Handvermischung vorteilhaft vermieden werden, wobei zudem unterschiedlichste Bechertypen von Autolackherstellern in den erfindungsgemäßen Mischer eingesetzt werden können, da durch die lösbare Mischgutaufnahme jeweils eine genau an einen oder mehrere Becher eines Lackherstellers angepasste Mischgutaufnahme verwendet werden kann.

Durch die lösbare, direkte Anbindung der Mischgutaufnahme an der Drehantriebswelle kann die lösbare Verbindung zudem einfach ohne zusätzlichen Bauteilaufwand realisiert werden. Besonders bevorzugt ist hierbei eine Ausgestaltung, bei der die lösbare Halterung durch eine werkzeuglos lösbare Schnellkupplungsverbindung ausgebildet ist. Diese werkzeuglos lösbare Schnellkupplungsverbindung kann zum Beispiel durch eine Rast- und Steckverbindung oder aber auch durch zum Beispiel eine Bajonettverschlussverbindung gebildet sein.

Gemäß Anspruch 2 ist die Vorrichtung insgesamt in einem Schutzgehäuse aufgenommen beziehungsweise mit einem Schutzgehäuse versehen, um einen Zugriff zu den sich drehenden Bauteilen der Vorrichtung, das heißt zum Beispiel zu dem Dreharm und der Mischgutaufnahme, insbesondere in deren Anbindungsbereich am Rahmen, zu vermeiden. Dieses Schutzgehäuse ist so ausgebildet, dass dieses zum Beispiel eine gehäuseseitige Öffnung aufweist, über die die Mischgutaufnahme mit dem Mischgut, zum Beispiel mit einem Autoreparaturlack-Becher mitsamt Becherdeckel, beschickbar ist. Erfindungsgemäß ist hier das Schutzgehäuse mehrteilig ausgebildet und zwar dergestalt, dass ein Schutzgehäuseteil drehfest mit dem ersten Bauteil verbunden ist, so dass dieses Schutzgehäuseteil relativ zu wenigstens einem weiteren Schutzgehäuseteil verdrehbar ist. Beispielsweise bildet dieses Schutzgehäuseteil, das mitrotiert, eine Schutzhaube aus. Ein derartiges mitrotierendes Schutzgehäuseteil vermeidet eine ansonsten erforderliche trennende Schutzvorrichtung. Besonders bevorzugt ist hierbei wiederum eine Ausgestaltung, bei der die relativ zueinander rotierenden Schutzgehäuseteile im Angrenzungsbereich in einer Anlageverbindung gleitend aufeinander abgestützt sind oder mit einem definierten Spaltabstand aneinandergrenzen, wobei der Spaltabstand dann so minimal ausgebildet ist, dass kein Eingriff mit zum Beispiel Fingern in den Gehäuseinnenraum möglich ist.

Des Weiteren ist gemäß einer weiteren bevorzugten konkreten Ausgestaltung zum Beispiel vorgesehen am Schutzgehäuse, insbesondere am nichtmitdrehenden Schutzgehäuseteil, eine Steuer- und Displayeinrichtung und/oder ein elektrisches Anschlusskabel für einen Netzanschluss anzuordnen. Beispielsweise kann über die Steuer- und Displayeinrichtung wenigstens ein Mischprogramm angewählt werden und/oder können die Mischparameter, wie zum Beispiel die Drehzahl und/oder die Mischzeiten vorgegeben werden. Gegebenenfalls kann die Steuer- und Displayeinrichtung aber auch eine Dokumentiereinrichtung aufweisen, mittels der eine Mischdokumentation erstellbar beziehungsweise abrufbar ist. Beispielsweise verfügt die Steuer- und Displayeinrichtung auch über eine PC-Schnittstelle, über die Bedienereingriffe, wie zum Beispiel eine Veränderung der Mischzeiten oder der Mischprogramme jederzeit möglich und/oder dokumentierbar sind. Gemäß einer weiteren besonders bevorzugten Ausgestaltung der vorliegenden Erfindung weist die Mischgutaufnahme eine sich von der Aufnahmeöffnung nach unten in Richtung zum Aufnahmeboden hin konisch verjüngende Aufnahmekontur auf. Alternativ oder zusätzlich dazu kann aber auch vorgesehen sein, in der Mischgutaufnahme elastisch vorgespannte Halteelemente anzuordnen, die sich bei einem in die Mischgutaufnahme eingesetzten Behältnis unter Federvorspannung an das Behältnis anlegen und dieses in Position halten. Mit den beiden zuvor beschriebenen Maßnahmen lässt sich sowohl einzeln als auch in Kombination untereinander eine Mehrzahl von unterschiedlichsten Becherarten funktionssicher in einer Mischgutaufnahme haltern, so dass insgesamt nur eine begrenzte Anzahl von Mischgutaufnahmen als zum Beispiel Mischgutaufnahmenset bereitgehalten werden muss.

Die Erfindung wird nachfolgend anhand von Figuren näher erläutert.

Es zeigen:
- Fig. 1: eine schematische perspektivische Ansicht einer erfindungsgemäßen Mischvorrichtung;
- Fig. 2: eine schematische, perspektivische Detailansicht eines Dreharms mitsamt lösbar abnehmbarer Mischgutaufnahme;
- Fig. 3: schematisch eine perspektivische Ansicht entsprechend Fig. 2 mit aufgesetzter Mischgutaufnahme; und
- Fig. 4: schematisch ein erfindungsgemäßes Geschwindigkeitsfeld an der Mischgutaufnahme.

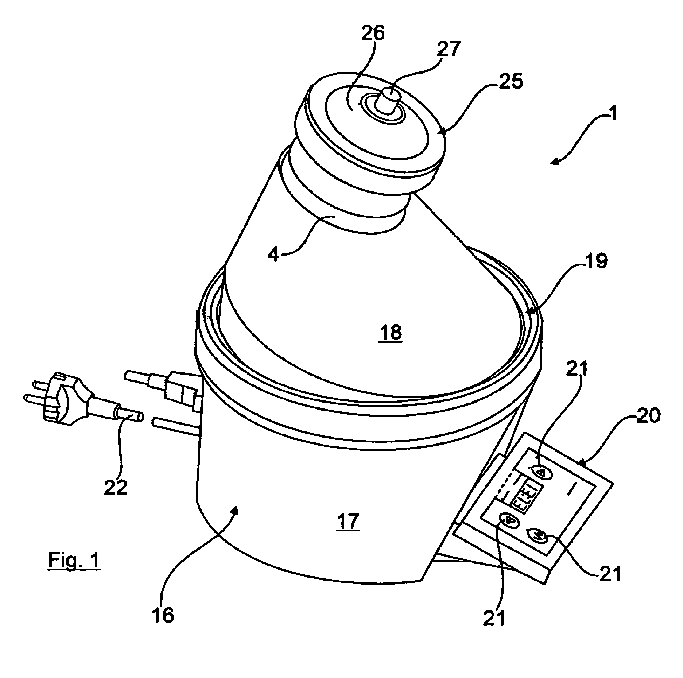

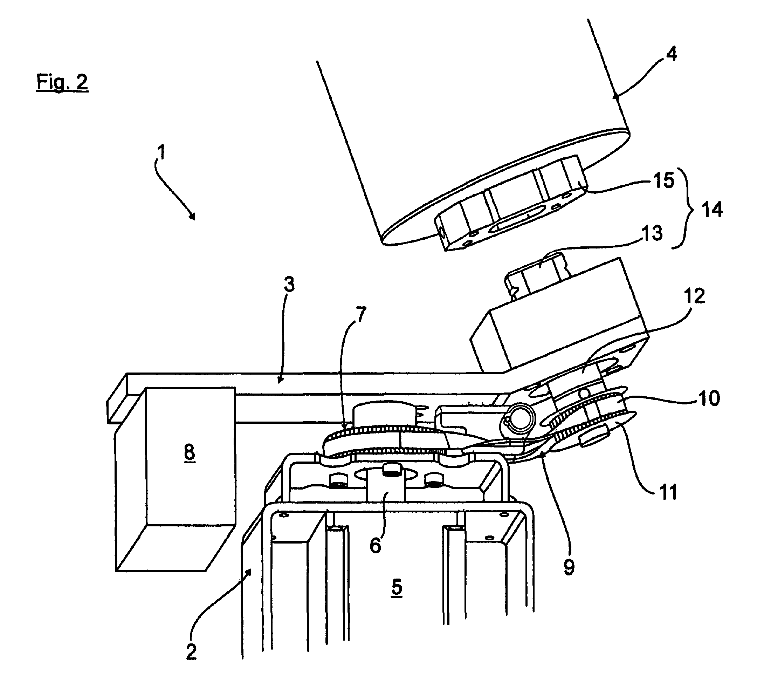

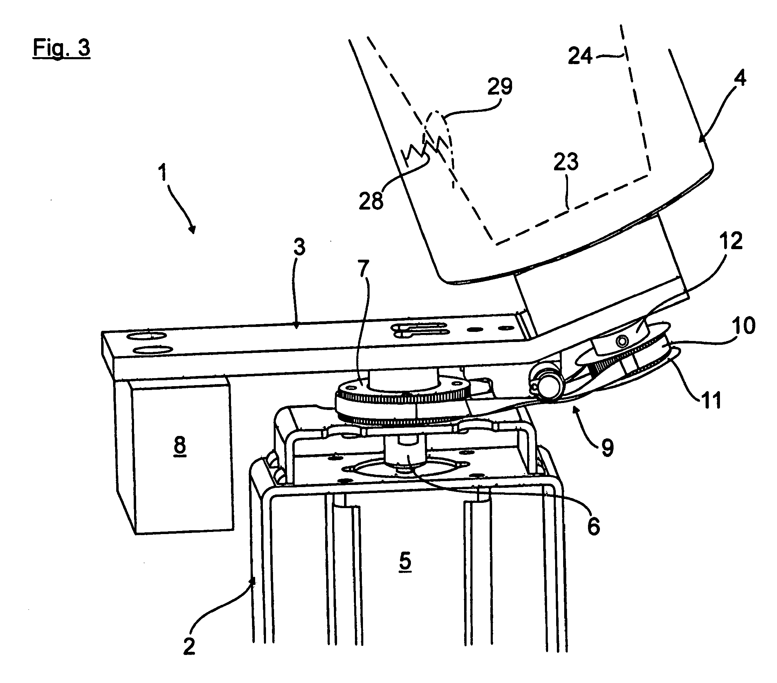

In der Fig. 1 ist schematisch und perspektivisch eine erfindungsgemäße Mischvorrichtung 1 gezeigt, deren Innenleben in Verbindung mit den Fig. 2 und 3 näher erläutert wird. Diese Mischvorrichtung weist einen Rahmen 2 auf, an dem ein Dreharm 3 in einer nachfolgend noch näher erläuterten Art und Weise drehbar gelagert ist. An diesem Dreharm 3 ist ferner an einem ersten Dreharmende eine Mischgutaufnahme 4 in ebenfalls nachfolgend noch näher zu beschreibender Art und Weise drehbar gelagert, wobei die Mischgutaufnahme 4 gegenüber der Dreharmlängsachse um einen definierten Winkel nach oben verlagert ist, so dass eine Schrägstellung der Mischgutaufnahme 4 erzielt wird. An der der Mischgutaufnahme 4 gegenüberliegenden Dreharmseite ist hier lediglich beispielhaft und schematisch ein Gegengewicht angeordnet, was für den Drehvorgang als solches und eventuell auftretende Unwuchten von Vorteil ist.

Der Drehantrieb des Dreharms 3 sowie der Mischgutaufnahme 4 erfolgt über eine Antriebseinrichtung, die einen hier nur blockweise dargestellten Schrittmotor 5 aufweist, dessen Antriebswelle 6 drehbeweglich durch eine eine Verzahnung aufweisende Riemenscheibe 7 hindurchgeführt und drehfest mit dem Dreharm 3 verbunden ist.

Die Riemenscheibe 7 bildet Bestandteil eines Keilriemenantriebs 9, der weiter einen Zahnriemen 10 sowie eine zweite mit einer Verzahnung ausgebildete Riemenscheibe 11 aufweist, um die der Zahnriemen 10 ebenfalls herumgeführt ist. Ferner umfasst der Keilriemenantrieb 9 noch Spannrollen, die den Zahnriemen 10 für eine funktionssichere Kraftübertragung gespannt halten.

Die Riemenscheibe 11 bildet, wie dies insbesondere der Fig. 2 entnommen werden kann, Bestandteil einer am Dreharm 3 drehbeweglich gelagerten Drehantriebswelle 12, die eine Stecknase 13 aufweist, die Bestandteil einer eine lösbare Mischgutaufnahme-Halterung ausbildenden, werkzeuglosen Schnellkupplungsverbindung 14 ist und die im montierten Zustand der Mischgutaufnahme 4 (Fig. 3) lösbar mit einer mischgutaufnahmeseitigen Stecknasenaufnahme 15 verbunden, insbesondere verrastet ist.

Wie dies insbesondere aus der Fig. 1 ersichtlich ist, ist die eben beschriebene Mimik in einem Schutzgehäuse 16 der Mischvorrichtung 1 aufgenommen, das hier lediglich beispielhaft zweiteilig aus einem unteren, ortsfesten Schutzgehäuseteil 17 und einem oberen, drehbeweglich mit dem Dreharm 3 verbundenen Schutzgehäuseteil 18 besteht, das bei einer Drehbewegung des Dreharms 3 mit diesem mitrotiert, so dass das Schutzgehäuseteil 18 relativ zum Schutzgehäuseteil 17 drehbeweglich ist.

Der Angrenzungsbereich 19 der relativ zueinander rotierenden Schutzgehäuseteile ist hier so ausgebildet, dass diese lediglich einen minimalen Spaltabstand voneinander aufweisen, so dass kein Eingriff mit zum Beispiel Fingern in das Gehäuseinnere möglich ist.

Am nichtmitdrehenden Schutzgehäuseteil 17 ist ferner noch eine Steuer- und Displayeinrichtung 20 angeordnet, über die über Bedientasten 21, die hier nur äußerst schematisch dargestellt sind, ein bestimmtes Mischprogramm angewählt werden kann, bei dem ein in der Mischgutaufnahme 4 aufgenommenes Mischgut mittels einer vorgegebenen Mischcharakteristik drehzahlabhängig durchmischt wird. Ferner ist hier beispielshaft am Schutzgehäuseteil 17 auch ein Auslass für ein elektrisches Anschlusskabel 22 vorgesehen, über das den elektrischen Bauteilen der Mischvorrichtung 1 Strom zugeführt werden kann.

Die Mischgutaufnahme 4 ist, wie dies insbesondere aus der Fig. 3 hervorgeht, im Inneren bevorzugt konisch ausgestaltet, dass heißt mit einer sich von einer Aufnahmeöffnung nach unten in Richtung zum Aufnahmeboden 23 hin verjüngenden Aufnahmekontur 24, so dass eine Vielzahl von bevorzugt Autoreparaturlacke enthaltenden Farbbechern 25 sicher in der Mischgutaufnahme 4 verklemmt werden kann. Die die zu mischenden Autoreparaturlacke aufnehmenden Farbbecher 25 sind bevorzugt mit einem Deckel 26 versehen, der über einen Anschluss 27 verfügt, der in eine hier nicht dargestellte Spritzpistole eingesetzt wird und über den der Lack aus dem Farbbecher 25 abgezogen wird.

Alternativ oder zusätzlich kann zur Farbbecherhalterung, wie dies ebenfalls in der Fig. 3 schematisch dargestellt ist, in der Mischgutaufnahme 4 auch ein mittels einer Feder 28 elastisch vorgespanntes Haltelement 29 vorgesehen sein, das bei eingesetztem Farbbecher 25 an dem Farbbecher 25 anliegt und diesen mit einer detaillierten Haltekraft in der Mischgutaufnahme 4 hält. Bevorzugt sind in einem solchen Fall dann mehrere in Umfangsrichtung verteilte und voneinander beabstandete Halteelemente 29 vorgesehen.

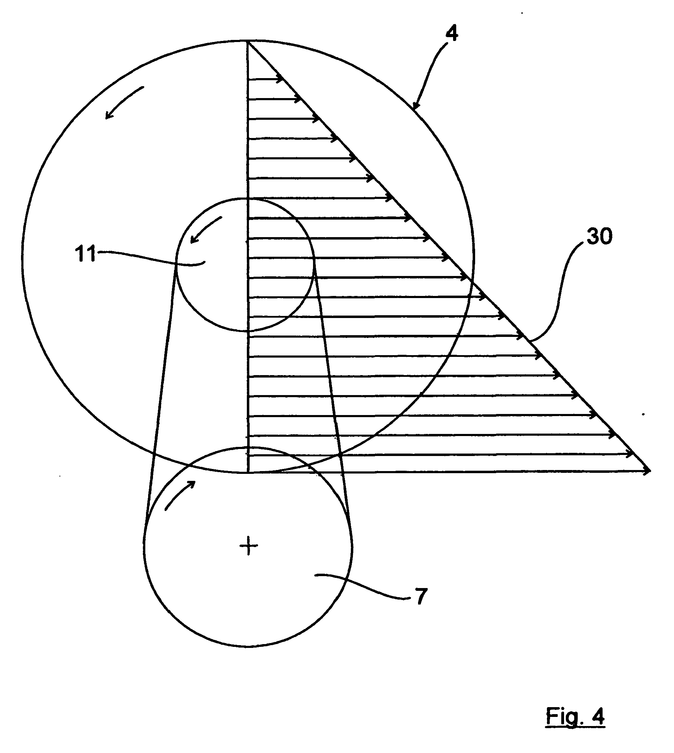

Wird die zuvor ausführlich und beispielhaft beschriebene Mischvorrichtung 1 nunmehr betätigt, so drehen sich der Dreharm 3 und die Mischgutaufnahme 4, wie in der Fig. 4 lediglich äußerst schematisch dargestellt, in entgegengesetzte Richtungen, wobei sich bei einem mittels der Steuer- und Displayeinrichtung 20 vorgegebenen Drehzahlverhältnis zwischen der Drehzahl des Dreharms 3 und der Drehzahl der Mischgutaufnahme 4 von in etwa 1:1,5, zum Beispiel bei einer Drehzahl von 300 U/min., ein resultierendes Geschwindigkeitsfeld 30 einstellt, wie es ebenfalls in der Fig. 4 dargestellt ist. Dieses dreieckförmige Geschwindigkeitsfeld, das sich über den mittleren Durchmesser der Mischgutaufnahme 4 beziehungsweise des Farbbecher-Innenraums einstellt, bewirkt eine solche vorteilhafte Vermischung des jeweiligen Lackes, dass es nicht zu unerwünschten Luftblasenbildungen kommt. Des Weiteren wird mit einem derartigen Geschwindigkeitsprofil auch das unerwünschte Hochschwappen des Lackes an den Deckel 26 beziehungsweise an ein im Bereich des Deckels angeordnetes Sieb (hier nicht dargestellt) vermieden, wodurch auf einfache und zuverlässige Weise sichergestellt wird, dass der Filter nicht mit einem inhomogenen, das heißt unvermischten Mischgut verschmutzt wird.

Mit einer derartigen erfindungsgemäßen Mischvorrichtung beziehungsweise mit einem derartigen erfindungsgemäßen Mischverfahren wird somit eine besonders hochwertige Lackmischung, insbesondere für Autoreparaturlacke erzielt, bei denen einem Grundlack zusätzliche Lackzudosierungen zugegeben werden, so dass eine über eine Spritzpistole aufgebrachte Lackierung mit hoher Qualität erreicht werden kann.

## Patentansprüche

1. Verfahren zum Betreiben einer Vorrichtung zum Mischen von flüssigen, fließfähigen oder pulverförmigen Materialien, insbesondere zum Mischen von Autoreparaturlacken zur Verwendung in Spritzpistolen,
mit einem an einem Rahmen (2) drehbar gelagerten ersten Bauteil (3),
mit einem drehbar an dem ersten Bauteil (3) gelagerten und eine Mischgutaufnahme (4) aufweisenden oder ausbildenden zweiten Bauteil, und
mit wenigstens einer Antriebseinrichtung für einen Drehantrieb des ersten Bauteils (3) und einen Drehantrieb der Mischgutaufnahme (4), wobei die Antriebseinrichtung bevorzugt so ausgebildet ist, dass die Drehrichtung des ersten Bauteils (3) entgegengesetzt zu der Drehrichtung der Mischgutaufnahme (4) ist,
**dadurch gekennzeichnet, dass**
das Drehzahlverhältnis zwischen der Drehzahl des ersten Bauteils (3) und der Drehzahl der Mischgutaufnahme (4) bei 1:1,1 bis 1:2,0 liegt, bei einer Drehzahl des ersten Bauteils (3) von 200 bis 400 U/min.

2. Vorrichtung zum Mischen von flüssigen, fließfähigen oder pulverförmigen Materialien, insbesondere zum Mischen von Autoreparaturlacken zur Verwendung in Spritzpistolen,
mit einem an einem Rahmen (2) drehbar gelagerten ersten Bauteil (3),
mit einem drehbar an dem ersten Bauteil (3) gelagerten und eine Mischgutaufnahme (4) aufweisenden oder ausbildenden zweiten Bauteil, und
mit wenigstens einer Antriebseinrichtung für einen Drehantrieb des ersten Bauteils (3) und einen Drehantrieb der Mischgutaufnahme (4), wobei die Antriebseinrichtung bevorzugt so ausgebildet ist, dass die Drehrichtung des ersten Bauteils (3) entgegengesetzt zu der Drehrichtung der Mischgutaufnahme (4) ist,
**dadurch gekennzeichnet, dass**
das Drehzahlverhältnis zwischen der Drehzahl des ersten Bauteils (3) und der Drehzahl der Mischgutaufnahme (4) bei 1:1,1 bis 1:2,0 liegt, bei einer Drehzahl des ersten Bauteils (3) von 200 bis 400 U/min,
dass die Vorrichtung (1) in einem Schutzgehäuse (16) aufgenommen ist, über das die Mischgutaufnahme (4) beschickbar ist, und
dass das Schutzgehäuse (16) mehrteilig ausgebildet ist dergestalt, dass ein Schutzgehäuseteil (18) drehfest mit dem ersten Bauteil (3) verbunden ist, so dass dieses Schutzgehäuseteil (18) relativ zu wenigstens einem weiteren Schutzgehäuseteil (17) verdrehbar ist.

3. Vorrichtung nach Anspruch 2, **dadurch gekennzeichnet, dass** an der Mischgutaufnahme (4) ein bezogen auf den Mischgutaufnahme-Durchmesser dreieckförmiges Geschwindigkeitsprofil (30) einstellbar ist.

4. Vorrichtung nach Anspruch 2 oder 3, **dadurch gekennzeichnet, dass** die- Drehantriebswelle- (12)- an- dem- der- Mischgutaufnahme- (4) abgewandten Wellenbereich eine Mischgutaufnahmen-Riemenscheibe (11) aufweist, um die herum ein Antriebsriemen (10) der Antriebseinrichtung geführt ist.

5. Vorrichtung nach Anspruch 4, **dadurch gekennzeichnet, dass** der Antriebsriemen (10) weiter um eine rahmenfeste Riemenscheibe (7) geführt ist, durch die eine Antriebswelle (6) eines durch einen Schrittmotor (5) ausgebildeten Antriebsmotors der Antriebseinrichtung drehbeweglich hindurchgeführt und drehfest mit dem als Dreharm (3) ausgebildeten ersten Bauteil verbunden ist.

6. Vorrichtung nach Anspruch 4 oder 5, **dadurch gekennzeichnet, dass** die Riemenscheiben (7, 11) eine Verzahnung aufweisen, und dass der Antriebsriemen durch einen Zahnriemen (10) ausgebildet ist.

7. Vorrichtung nach einem der Ansprüche 2 bis 6, **dadurch gekennzeichnet, dass** die Mischgutaufnahme (4) lösbar an einer diese antreibenden Drehantriebswelle (12) der Antriebseinrichtung gehaltert ist.

8. Vorrichtung nach Anspruch 7, **dadurch gekennzeichnet, dass** die lösbare Halterung durch eine werkzeuglos lösbare Schnellkupplungsverbindung (14), insbesondere durch eine Rast- und Steckverbindung oder durch eine Bajonettverschlussverbindung, gebildet ist.

9. Vorrichtung nach einem der Ansprüche 2 bis 8, **dadurch gekennzeichnet, dass** die relativ zueinander rotierenden Schutzgehäuseteile (17, 18) im Angrenzungsbereich (19) in einer Anlageverbindung gleitend aufeinander abgestützt sind oder mit einem definierten Spaltabstand aneinander angrenzen.

10. Vorrichtung nach einem der Ansprüche 2 bis 9, **dadurch gekennzeichnet, dass** am Schutzgehäuse (16) am nicht mitdrehenden Schutzgehäuseteil (17) eine Steuer- und Displayeinrichtung (20) und/oder ein elektrisches Anschlusskabel (22) für einen Netzanschluss angeordnet ist.

11. Vorrichtung nach Anspruch 10, **dadurch gekennzeichnet, dass** über die Steuer- und Displayeinrichtung (20) wenigstens ein Mischprogramm vorgegeben ist und/oder die Mischparameter vorgegeben sind.

12. Vorrichtung nach einem der Ansprüche 2 bis 11, **dadurch gekennzeichnet, dass** die Mischgutaufnahme (4) eine sich von der Aufnahmeöffnung nach unten in Richtung zum Aufnahmeboden (23) hin konisch verjüngende Aufnahmekontur aufweist.

13. Vorrichtung nach einem der Ansprüche 2 bis 12, **dadurch gekennzeichnet, dass** in der Mischgutaufnahme (4) wenigstens ein elastisch vorgespanntes Halteelement (29) angeordnet ist, das sich bei einem in die Mischgutaufnahme (4) eingesetzten Behältnis (25) unter Federvorspannung an das Behältnis (25) anlegt und dieses in Position hält.

## Claims

1. Method to operate a device to mix liquid, flowable or pulverulent materials, in particular to mix automotive refinish coatings for use in spray guns,
having a first component (3) which is supported rotatably on a frame (2),
having a second component which is supported rotatably on the first component (3) and has or forms a mixture receiver (4), and
having at least one drive device for a rotary drive of the first component (3) and a rotary drive of the mixture receiver (4), wherein the drive device is preferably formed such that the rotational direction of the first component (3) is opposed to the rotational direction of the mixture receiver (4),
**characterised in that**
the rotational speed ratio between the rotational speed of the first component (3) and the rotational speed of the mixture receiver (4) lies at 1:1,1 to 1:2,0, at a rotational speed of the first component (3) of 200 to 400 rpm.

2. Device to mix liquid, flowable or pulverulent materials, in particular to mix automotive refinish coatings for use in spray guns,
having a first component (3) which is supported rotatably on a frame (2),
having a second component which is supported rotatably on the first component (3) and has or forms a mixture receiver (4), and
having at least one drive device for a rotary drive of the first component (3) and a rotary drive of the mixture receiver (4), wherein the drive device is preferably formed such that the rotational direction of the first component (3) is opposed to the rotational direction of the mixture receiver (4),
**characterised in that**
the rotational speed ratio between the rotational speed of the first component (3) and the rotational speed of the mixture receiver (4) lies at 1:1,1 to 1:2,0, at a rotational speed of the first component (3) of 200 to 400 rpm,
that the device (1) is received in a protective housing (16), via which the mixture receiver (4) is able to be filled, and
that the protective housing (16) is formed in several parts, in such a way that a protective housing part (18) is connected to the first component (3) so that it cannot rotate, such that this protective housing part (18) is able to rotate relative to at least one further protective housing part (17).

3. Device according to claim 2, **characterised in that** a speed profile (30), which is triangular with regard to the diameter of the mixture receiver, is able to be adjusted on the mixture receiver (4).

4. Device according to claim 2 or 3, **characterised in that** the rotary drive shaft (12) has a mixture receiver belt pulley (11) on the shaft region facing away from the mixture receiver (4), around which a drive belt (10) of the drive device is guided.

5. Device according to claim 4, **characterised in that** the drive belt (10) is further guided around a belt pulley (7), that is fixed to the frame, through which belt pulley (7) a drive shaft (6) of a drive motor of the drive device, formed by a stepper motor (5), is rotatably guided and is connected to the first component formed as a rotating arm (3) so that it cannot rotate.

6. Device according to claim 4 or 5, **characterised in that** the belt pulleys (7, 11) have a gearing, and that the drive pulley is formed by a toothed belt (10).

7. Device according to one of claims 2 to 6, **characterised in that** the mixture receiver (4) is mounted releasably on a rotary drive shaft (12) of the drive device driving the mixture receiver (4).

8. Device according to claim 7, **characterised in that** the releasable mounting is formed by a quick connect connection (14) that can be released without tools, in particular by a snap and plug connection or by a bayonet joint connection.

9. Device according to one of claims 2 to 8, **characterised in that** the protective housing parts (17, 18), which rotate relative to one another, are supported in the adjoining region (19) in a sliding manner in touching connection or border each other at a defined distance.

10. Device according to one of claims 2 to 9, **characterised in that** a control and display device (20) and/or an electrical connection cable (22) for a mains connection is arranged on the protective housing (16) on the protective housing part (17) that does not rotate.

11. Device according to claim 10, **characterised in that** at least one mixing programme is predetermined and/or the mixing parameters are predetermined via the control and display device (20).

12. Device according to one of claims 2 to 11, **characterised in that** the mixture receiver (4) has a receiver outline which tapers conically from the receiver opening downward in the direction of the receiver base (23).

13. Device according to one of claims 2 to 12, **characterised in that** at least one elastically pre-stressed holding element (29) is arranged in the mixture receiver (4), said holding element (29) applying itself to a container (25) which is introduced into the mixture receiver (4), using spring preload and holding this container (25) in position.

## Revendications

1. Procédé servant à faire fonctionner un dispositif servant à mélanger des matériaux liquides, fluides ou pulvérulents, en particulier servant à mélanger des laques de réparation pour véhicules destinées à être utilisées dans des pistolets pulvérisateurs,
comprenant un premier composant (3) logé de manière à pouvoir tourner au niveau d'un cadre (2),
comprenant un deuxième composant logé de manière à pouvoir tourner au niveau du premier composant (3) et présentant ou formant un logement pour produit à mélanger (4), et
comprenant au moins un système d'entraînement pour un entraînement en rotation du premier composant (3) et pour un entraînement en rotation du logement pour produit à mélanger (4), le système d'entraînement étant réalisé de préférence de telle manière que le sens de rotation du premier composant (3) est opposé au sens de rotation du logement pour produit de mélange (4),
**caractérisé en ce que**
le rapport de la vitesse de rotation entre la vitesse de rotation du premier composant (3) et la vitesse de rotation du logement pour produit de mélange (4) est compris entre 1:1,1 et 1:2,0, pour une vitesse de rotation du premier composant (3) allant de 200 à 400 t/min.

2. Dispositif servant à mélanger des matériaux liquides, fluides ou pulvérulents, en particulier servant à mélanger des laques de réparation pour véhicules destinées à être utilisées dans des pistolets pulvérisateurs,
comprenant un premier composant (3) logé de manière à pouvoir tourner au niveau d'un cadre (2),
comprenant un deuxième composant logé de manière à pouvoir tourner autour du premier composant (3) et présentant ou formant un logement pour produit à mélanger (4), et
comprenant au moins un système d'entraînement pour un entraînement en rotation du premier composant (3) et pour un entraînement en rotation du logement pour produit à mélanger (4), le système d'entraînement étant réalisé de préférence de telle manière que le sens de rotation du premier composant (3) est opposé au sens de rotation du logement pour produit à mélanger (4),
**caractérisé en ce que**
le rapport de la vitesse de rotation entre la vitesse de rotation du premier composant (3) et la vitesse de rotation du logement pour produit à mélanger (4) est compris entre 1:1,1 et 1:2,0 pour une vitesse de rotation du premier composant (3) allant de 200 à 400 t/min,
**en ce que** le dispositif (1) est logé dans un boîtier de protection (16), par l'intermédiaire duquel le logement pour produit à mélanger (4) peut être chargé, et
**en ce que** le boîtier de protection (16) est réalisé en plusieurs parties de telle manière qu'une partie de boitier de protection (18) est reliée de manière solidaire en rotation au premier composant (3) de sorte que ladite partie de boîtier de protection (18) peut tourner par rapport à au moins une autre partie du boîtier de protection (17).

3. Dispositif selon la revendication 2, **caractérisé en ce qu'**un profil de vitesse (30) de forme triangulaire par rapport au diamètre du logement pour produit à mélanger peut être ajusté et adapté au logement pour produit à mélanger (4).

4. Dispositif selon la revendication 2 ou 3, **caractérisé en ce que** l'arbre d'entraînement en rotation (12) présente, au niveau de la zone d'arbre opposée au logement pour produit à mélanger (4), une poulie à courroie (11) de logements pour produit à mélanger, autour de laquelle est guidée une courroie d'entraînement (10) du système d'entraînement.

5. Dispositif selon la revendication 4, **caractérisé en ce que** la courroie d'entraînement (10) est guidée en outre autour d'une poulie à courroie (7) solidaire du cadre, à travers laquelle est guidé de manière mobile en rotation un arbre d'entraînement (6) d'un moteur d'entraînement, réalisé par un moteur pas à pas (5), du système d'entraînement, l'arbre d'entraînement étant relié de manière solidaire en rotation au premier composant en la forme de bras rotatif (3).

6. Dispositif selon la revendication 4 ou 5, **caractérisé en ce que** les poulies à courroie (7, 11) présentent une denture, et **en ce que** la courroie d'entraînement est formée par une courroie dentée (10).

7. Dispositif selon l'une quelconque des revendications 2 à 6, **caractérisé en ce que** le logement pour produit à mélanger (4) est maintenu de manière à pouvoir être retiré au niveau d'un arbre d'entraînement en rotation (12), entraînant ledit logement pour produit à mélanger, du système d'entraînement.

8. Dispositif selon la revendication 7, **caractérisé en ce que** la fixation pouvant être retirée est formée par un système d'assemblage par accouplement rapide (14) pouvant être retiré sans outil, en particulier par un système d'assemblage par encliquetage et par emboîtement ou par un système d'assemblage à fermeture à baïonnette.

9. Dispositif selon l'une quelconque des revendications 2 à 8, **caractérisé en ce que** les parties de boîtier de protection (17, 18) tournant les unes par rapport aux autres s'appuient de manière à glisser les unes sur les autres, dans la zone adjacente (19) ou sont adjacentes avec un écartement défini.

10. Dispositif selon l'une quelconque des revendications 2 à 9, **caractérisé en ce qu'**un système de commande et d'affichage (20) et/un un câble électrique de raccordement (22) pour un raccordement au réseau sont disposés au niveau du boîtier de protection (16), au niveau de la partie de boîtier de protection (17) n'étant pas entraînée en rotation.

11. Dispositif selon la revendication 10, **caractérisé en ce qu'**au moins un programme de mélange est prédéfini par le système de commande et d'affichage (20), et/ou **en ce que** les paramètres de mélange sont prédéfinis par le système de commande et d'affichage (20).

12. Dispositif selon l'une quelconque des revendications 2 à 11, **caractérisé en ce que** le logement pour produit à mélanger (4) présente un contour de logement se rétrécissant de manière conique en partant de l'orifice de logement vers le bas en direction du fond du logement (23).

13. Dispositif selon l'une quelconque des revendications 2 à 12, **caractérisé en ce qu'**au moins un élément de maintien (29) précontraint élastiquement est disposé dans le logement pour produit à mélanger (4), lequel, lorsqu'un récipient (25) est inséré dans le logement pour produit à mélanger (4), s'appuie contre ledit récipient (25) sous l'effet d'une précontrainte élastique et maintient ledit récipient en position.
